# EUROPÄISCHE PATENTANMELDUNG

(11) **EP 2 017 235 A2**
(43) Veröffentlichungstag der Anmeldung: **21.01.2009**
(21) Anmeldenummer: 08010178.5
(22) Anmeldetag: 04.06.2008
(51) Int. Cl.: C03B 23/043

(54) **Gas-Elektro-Glaserwärmungsvorrichtung**

(30) Priorität: 20.06.2007 DE 102007028825
(71) Anmelder: AMBEG Dr. J. Dichter GmbH, 10829 Berlin (DE)
(72) Erfinder: Dichter, Hans-Joachim, 14193 Berlin (DE)
(74) Vertreter: Grünecker, Kinkeldey, Stockmair & Schwanhäusser Anwaltssozietät

(57) **Zusammenfassung**

Die vorliegende Erfindung betrifft ein Verfahren zum wenigstens abschnittsweisen Schmelzen von Glaswerkstücken (4), bei dem ein Glaswerkstück (4) zunächst wenigstens abschnittsweise vorgewärmt wird und bei dem das Glaswerkstück (4) zumindest während des Schmelzvorganges von einem Gasstoffstrom (14) angeströmt wird. Ferner betrifft die Erfindung eine Glasschmelzvorrichtung (1) mit wenigstens einer Beblasungsvorrichtung (2), die wenigstens einen auf einen ein Glaswerkstück (4) aufnehmenden Bearbeitungsbereich (5) ausrichtbaren ersten Strtimungsaustritt (3) aufweist, wobei in einem Vorwärmbetrleb ein Gasstoffstrom (14) die Beblasungseinrichtung (2) mit dem Glaswerkstück (4) verbindet. Um die zum Schmelzen benötigte Zeit zu verkürzen und Glaswerkstücke (4) schonend und gleichmäßig von innen heraus zu erwärmen, ist erfindungsgemäß vorgesehen, dass nach dem Vorwärmen wenigstens ein Teil der zum Schmelzen notwendigen Wärme aus elektrischer Energie erzeugt wird, die entlang einer im Gasstoffstrom (14) gebildeten Funkenstrecke (17) auf das Glaswerkstück (4) und wenigstens abschnittsweise durch das Glaswerkstück (4) geleitet wird.

## Beschreibung

Die Erfindung betrifft ein Verfahren zum wenigstens abschnittsweise Schmelzen von Glaswerkstücken, bei dem ein Glaswerkstück zunächst wenigstens abschnittsweise vorgewärmt wird und bei dem das Glaswerkstück zumindest während des Schmelz,vorganges von einem Gasstoffstrom angeströmt wird. Ferner betrifft die Erfindung eine Glasschmelzvorrichtung mit wenigstens einer Beblasungsvorrichtung, die wenigstens einen auf einen ein Glaswerkstück aufnehmenden Bearbeitungsbereich ausrichtbaren ersten Strömungsaustritt aufweist, wobei in einem Vorwärmbetrieb ein Gasstoffstrom die Beblasungseinrichtung mit dem Glaswerkstück verbindet.

Verfahren und Vorrichtungen zum Schmelzen von Glaswerkstücken sind bekannt. Sie werden bei der Herstellung bzw. Formung von Glasobjekten eingesetzt, um diese zumindest teilweise zu schmelzen, damit sie anschließend bearbeitet werden können.

Gemäß dem Stand der Technik werden die Glaswerkstücke meist in einer oder mehreren Brennerflammen erwärmt. Nach dem Erreichen einer gewünschten, für die Formgebung des Glaswerkstückes erforderlichen Temperatur wird das Glaswerkstück den jeweiligen Anforderungen gemäß verformt.

Bei der großindustriellen Fertigung von Glasobjekten, insbesondere Hohlgläsern, wie Ampullen und Flaschen, werden die einzelnen Werkstücke mit einem Spannfutter gegriffen und in den Bearbeitungsbereich der Brenner geführt. In diesem verweilen sie je nach Größe und Materialstärke mehrere Sekunden, wobei im Falle der Verarbeitung kleinerer Ampullen eine Erwärmungsdauer von 1,5 bis 2 Sekunden zur Erreichung der gewünschten Temperatur ausreichen kann. Um bei der Fertigung größerer Stückzahlen Zeit zu sparen, befinden sich die Glaswerkstücke meist in ständiger Bewegung und die Brenner werden den Bewegungsbahnen der Glaswerkstücke nachgeführt. Dabei ist die geringste zu realisierende Schmelzzeit im Wesentlichen von der Flammentemperatur des Brenners sowie der von der Brennerflamme erfassten Oberfläche des Glaswerkstückes abhängig. Sowohl die maximale Flammentemperatur als auch die Oberfläche des zu erwärmenden Glaswerkstückes sind aber begrenzt und die Erwärmungs- bzw. Schmelzzeit lässt sich mit den verwendeten Gasbrennern nicht weiter, als ein durch die vorbenannten Parameter definiertes Minimum, reduzieren.

Im Stand der Technik sind Maßnahmen bekannt, um ein Glaswerkstück möglichst gleichmäßig und flächig sowie schnell zu erwärmen.

So ist in der DE 22 34 063 A eine Maschine zum Herstellen von Glasgefäßen beschrieben, in der Glasrohre mehrere Arbeitsstationen durchlaufen, paarweise angeordnet sind und in einem um die eigene Achse rotierenden Spannfutter gehalten durch eine Brennerflamme geführt und erweicht werden. Durch die in der DE 22 34 063 A gezeigte Anordnung soll eine besonders gleichmäßige Erwärmung von Glaswerkstücken bzw. Glasrohrabschnitten erreicht werden.

Ferner zeigt die DE 3400710 C2 einen Gasbrenner, wie er für die Herstellung von Vorformen für Lichtwellenleiter eingesetzt wird. Der Brenner besitzt einen so genannten "Multidüsenbrennkopf", der ein besonders gleichmäßiges Erwärmen eines Werkstückes ermöglichen soll. Zusätzlich ist der Brenner an einer Drehachse schwenkbar und längs, zu der Drehachse verschiebbar gelagert, wodurch die "Heizzone" des Brenners den jeweiligen Anforderungen gemäß optimal ausgerichtet werden kann.

Die im Stand der Technik bekannten Maßnahmen zur Optimierung des Erwärmens bzw. Schmelzens eines Glaswerkstückes können die physikalischen durch Flammentemperatur bzw. Wärmestrom und Fläche des Glaswerkstückes vorgegebenen physikalischen Grenzen für eine weitere Verkürzung der Erwärmungszeit nicht überwinden. Darüber hinaus steigt der apparative Aufwand und damit die Kosten bei einer Annäherung an ein theoretisches Minimum der Aufwärmzeit überproportional an. Somit ist eine weitere Senkung von Aufwärmzeiten und eine gleichmäßigere Erwärmung von Glaswerkstücken auch unter wirtschaftlichen Gesichtspunkten mit den herkömmlichen Schmelzverfahren durch Gasbrenner erschwert.

Der Erfindung liegt folglich die Aufgabe zugrunde, Glaswerkstücke schneller und gleichmäßiger, als mit den im Stand der Technik bekannten Verfahren zu erwärmen, ohne einen wirtschaftlich nicht zu rechtfertigenden apparativen Aufwand zu betreiben.

Diese Aufgabe wird für das eingangs genannte Verfahren dadurch gelöst, dass nach dem Vorwärmen wenigstens ein Teil der zum Schmelzen notwendigen Wärme aus elektrischer Energie erzeugt wird, die entlang einer im Gasstoffstrom gebildeten Funkenstrecke auf das Glaswerkstück und wenigstens abschnittsweise durch das Glaswerkstück geleitet wird. Dabei wird der Effekt genutzt, dass mineralsalzhaltige Glassorten bei Temperaturen oberhalb von ca. 500°C aufgrund ihres lonengehaltes voll elektrisch leitend werden, bzw. ihr elektrischer Widerstand signifikant abnimmt. Somit braucht ein Glaswerkstück, durch beispielsweise einem herkömmlichen Gasbrenner, nur noch bis zu einer gewünschten Vorwärmtemperatur erwärmt werden, bei welcher das Glaswerkstück eine gewünschte Leitfähigkeit besitzt, und kann anschließend durch elektrische Energie weitererwärmt werden.

Das Erwärmen mit elektrischer Energie hat mehrere Vorteile. Durch die Verwendung elektrischer Energie, die durch das Glaswerkstück geleitet wird, wird dessen verbleibender elektrischer Widerstand dazu ausgenutzt, es von innen heraus zu erwärmen und zu schmelzen, Dabei kann das Glaswerkstück deutlich schneller als mit herkömmlichen Verfahren erhitzt werden, weil mit der elektrischen Energie weitaus größere Wärmeleistungen auf das Glaswerkstück übertragen werden können. Dabei ist der Erwärmungsprozess nicht mehr auf die von einer Brennerflamme umstrichene Außenfläche des Glaswerkstückes beschränkt, sondern das gesamte von der elektrischen Energie durchflossene Volumen des Glaswerkstückes wird zur Wärmeeinbringung genutzt. Dadurch verringern sich auch die Temperaturgradienten innerhalb des Glaswerkstückes, welche sich sonst bei der Erwärmung seiner Oberfläche entlang seines Querschnittes ergeben, und eine gleichmäßigere Erwärmung ist möglich.

Die elektrische Energie entlang einer Funkenstrecke im Gasstoffstrom auf das Glaswerkstück zu leiten, hat die Vorteile, dass sie über Ionen im Gasstoffstrom gezielter auf das Glaswerkstück gerichtet werden kann. Darüber hinaus ist die zum Zünden der Funkenstrecke benötigte Energie bei der Verwendung eines geeigneten Gasstoffes, welcher sich besonders leicht ionisieren lässt, herabgesetzt.

Ein erfindungsgemäßes Verfahren kann sinnvoll dadurch ergänzt werden, dass nach dem Vorwärmen die elektrische Energie dem Vorwärmprozess zugeschaltet wird. Somit lässt sich ein zu schmelzendes Glaswerkstück mit einer Kombination der durch die elektrische Energie und den Vorwärmprozess erzeugbaren Wärmeleistungen noch schneller bis zu einer gewünschten Temperatur erwärmen.

In einem erfindungsgemäßen Verfahren kann es auch sinnvoll sein, dass nach dem Vorwärmen die zum Vorwärmen verwendete Energiequelle abgeschaltet wird. Diese Verfahrensweise kann insbesondere dann von Vorteil sein, wenn ein Glaswerkstück ausschließlich durch die elektrische Energie möglichst gleichmäßig von innen heraus erwärmt werden soll. Darüber hinaus kann ein Abschalten der Vorwärmeinrichtung sinnvoll sein, wenn die mit ihr zu erzielenden Wärmeleistungen, bzw. Temperaturgradienten ohnehin keine wesentliche Beschleunigung des Schmelzprozesses bewirken können, weil sie bedeutend niedriger sind, als bei der elektrischen Energie. Somit kann es unter Umständen sogar wirtschaftlicher und umweltschonender sein, das Glaswerkstück nach dem Vorwärmen ausschließlich mit elektrischer Energie zu schmelzen und dadurch die Betriebskosten für eine zum Vorwärmen verwendete Energiequelle einzusparen sowie deren Emission umweltschädlicher Substanzen zu mindern.

Ein erfindungsgemäßes Verfahren kann sinnvoll dadurch weiter ergänzt werden, dass aus dem Glaswerkstück die auf das Glaswerkstück übergeleitete elektrische Energie entlang einer weiteren Funkenstrecke in einem weiteren Gasstoffstrom abgeleitet wird. Dadurch kann die elektrische Energie quasi ohne mechanische Einwirkungen, gewissermaßen berührungslos, auf den zu schmelzenden Bereich eines Glaswerkstückes übergeleitet werden.

Eine derartige Verfahrensweise ist insbesondere dann vorteilhaft, wenn gemäß einer weiteren sinnvollen möglichen Ergänzung des erfindungsgemäßen Verfahrens vorgesehen wird, dass der Weg der elektrischen Energie durch das Glaswerkstück geändert wird, indem die Einleitungsstelle und/oder die Ableitungsstelle der elektrischen Energie verändert wird. Diese Veränderung ist besonders einfach zu realisieren, wenn der vom Gasstoffstrom beströmte Bereich des Glaswerkstückes und damit die Einleitungsstelle bzw. Ableitungsstelle der elektrischen Energie, beispielsweise durch eine Bewegung des Glaswerkstückes und/oder der Elektroden, variiert wird.

Eine derartige Variation lässt sich gemäß einer weiteren sinnvollen, möglichen Ergänzung eines erfindungsgemäßen Verfahrens auch dadurch realisieren, dass die Funkenstrecke vom und/oder zum Glaswerkstück mit Hilfe eines Magnetfeldes geändert wird. Dadurch lässt sich der Verlauf der Funkenstrecke einfach manipulieren, ohne die Position einer die Funkenstrecke erzeugenden Elektrode variieren zu müssen. Somit kann mechanischer Aufwand, beispielsweise für ein Schwenken des Gasstoffstromes, vermieden werden. Wenn das Magnetfeld durch einen Elektromagneten erzeugt wird, können zusätzlich elektronische Steuerungsfunktionen für die Beeinflussung des Magnetfeldes und damit der Funkenstrecke genutzt werden, welche eine präzise und schnelle Beeinflussung der Funkenstrecke ermöglichen.

Ein erfindungsgemäßes Verfahren kann weiter sinnvoll dadurch ergänzt werden, dass das Glaswerkstück mit dem Gasstoffstrom vorgewärmt wird. Somit stellt der Gasstoffstrom die Energiequelle für den Vorwärmprozess dar und ein besonders schnelles Zuschalten, bzw. Umschalten der elektrischen Energie ist möglich, ohne dabei das Glaswerkstück aus derzum Vorwärmen verwendeten Einrichtung entfernen zu müssen. Darüber hinaus kann der Vorwärmprozess nahtlos in den Schmelzprozess mit elektrischer Energie überführt werden.

Ein erfindungsgemäßes Verfahren kann auch sinnvoll dadurch weiterverbessert werden, dass in dem Gasstoffstrom eine Verbrennungsreaktion eines Gasstoffes herrscht. Somit lässt sich sehr einfach die für den Vorwärmprozess benötigte Wärmeenergie bereitstellen. Darüber hinaus begünstigt eine Verbrennungsreaktion im Gasstoffstrom die Bildung der zum Erzeugen der Funkenstrecke notwendigen lonen. Somit kann die zum Zünden notwendige elektrische Spannung reduziert werden.

Ein erfindungsgemäßes Verfahren kann sinnvoll dadurch ergänzt werden, dass die Funkenstrecke mit einer erhöhten Spannung der elektrischen Energie gezündet und der Schmelzvorgang nach dem Zünden mit einer erhöhten Stromstärke der elektrischen Energie durchgeführt wird. Somit wird die Funkenstrecke in einen Lichtbogen umgewandelt. Dabei können im Lichtbogen Gastemperaturen von ca. 5000 bis 50000 K erreicht werden.

Durch die Verringerung der Spannung ist eine Erwärmung eines Glaswerkstückes insbesondere dann deutlich verbessert, wenn die zur Erzeugung der Funkenstrecke verwendeten Elektroden versetzt angeordnet sind und die elektrische Energie auf einer Diagonalen durch das Glaswerkstück geleitet wird. Die elektrische Energie wählt dann nicht den kürzesten Weg zwischen den Spannungspolen, sondern den kürzesten Weg zum Glaswerkstück, in welchem sie dann einen längeren Weg als auf der Geraden zwischen den Elektroden beschreibt.

Ein erfindungsgemäßes Verfahren lässt sich sinnvollerweise dadurch ergänzen, wenn von der Möglichkeit Gebrauch gemacht wird, dass mit dem Gasstoffstrom zumindest abschnittsweise eine Schutzatmosphäre um das Glaswerkstück gebildet wird. Somit lassen sich schädliche Umwelteinflüsse durch reaktive Substanzen, die das Glaswerkstück bei dem Schmelzprozess umgeben und schädigen könnten, mit Hilfe des Schutzgases innerhalb der von ihm gebildeten Schutzatmosphäre um das Glaswerkstück verdrängen.

Ein erfindungsgemäßes Verfahren kann sinnvoll dadurch ergänzt werden, dass das Glaswerkstück mit dem Gasstoffstrom exzentrisch angeströmt wird. Somit umströmt der Gasstoffstrom förmlich das Glaswerkstück. Insbesondere bei der Verwendung von mehreren exzentrisch zum Glaswerkstück angeordneten Gasstoffströmen kann somit eine regelrechte Umwirbelung und Einhüllung des Glaswerkstückes in den Gasstoffstrom erreicht werden.

Die Bearbeitungszeiten von Glaswerkstücken können gemäß einer weiteren möglichen vorteilhaften Ergänzung eines erfindungsgemäßen Verfahrens verringert werden, wenn vorgesehen wird, dass das Glaswerkstücks während des Schmelzens bewegt wird und der Gasstoffstrom mit den Bewegungen des Glaswerkstücks mitgeführt wird.

Ferner kann ein erfindungsgemäßes Verfahren sinnvoll dadurch ergänzt werden, dass das Zünden der Funkenstrecke nach einer bestimmten Vorwärmzeit und/oder nach dem Erreichen einer bestimmten Umschalttemperatur erfolgt. Dementsprechend kann ein erfindungsgemäßes Umschalten von einer Vorwärmphase zu einer Elektroheizphase, den jeweiligen Anforderungen entsprechend, individuell für ein zu schmelzendes Glaswerkstück sowohl bei Erreichen der gewünschten Umschalttemperatur, als auch für einen Zeitpunkt, an dem der Vorwärmprozess im Allgemeinen abgeschlossen ist, vollzogen werden.

Hinsichtlich der eingangs genannten Glasschmelzvorrichtung wird die obige Aufgabe erfindungsgemäß dadurch gelöst, dass dem ersten Strömungsaustritt eine erste Elektrode zugeordnet ist, dass eine in einen Elektroheizbetrieb umschaltbare Umschaltvorrichtung vorgesehen ist, durch welche in einem Elektroheizbetrieb eine elektrische Energiequelle mit der ersten Elektrode verbunden ist, und dass im Elektroheizbetrieb eine erste Funkenstrecke die Elektrode entlang des ersten Gasstoffstroms mit dem Glaswerkstück verbindet. Auf der Funkenstrecke kann elektrische Energie von der Elektrode zum Glaswerkstück geleitet werden. Wenn das Glaswerkstück nach dem Vorwärmen eine genügend hohe Temperatur besitzt, ist es elektrisch leitend und die elektrische Energie fließt durch das Glaswerkstück hindurch und erwärmt es von innen heraus. Somit lassen deutlich höhere Wärmeleistungen als mit den herkömmlichen Vorrichtungen bzw. Gasbrennern auf das Glaswerkstück übertragen.

Die erfindungsgemäße Lösung kann mit den folgenden weiteren jeweils für sich vorteilhaften Ausgestaltungen beliebig kombiniert und weiter verbessert werden.

So kann in einer ersten vorteilhaften, möglichen Ausgestaltung eine zweite Elektrode vorgesehen werden, die im Elektroheizbetrieb über eine zweite Funkenstrecke mit dem Glaswerkstück verbunden ist. Diese zweite Elektrode lässt sich den jeweiligen Anforderungen gemäß zum Glaswerkstück und der ersten Elektrode positionieren; wodurch der Verlauf der Funkenstrecke bestimmt werden kann und sich variieren lässt, wenn vorgesehen wird, dass die erste Elektrode, die zweite Elektrode und/oder das Glaswerkstück beweglich gelagert sind.

Gemäß einer weiteren, möglichen vorteilhaften Ausgestaltung kann vorgesehen werden, dass die zweite Elektrode wenigstens einem zweiten Strömungsaustritt zugeordnet ist, wobei im Vorwärmbetrieb der zweite Strömungsaustritt über einen zweiten Gasstoffstrom mit dem Glaswerkstück verbunden ist, und dass die zweite Funkenstrecke innerhalb des zweiten Gasstoffstroms verläuft. Somit lässt sich die Position beider Elektroden variieren und der elektrische Strom kann ohne einen mechanischen Kontakt zum Glaswerkstück auf dieses über- und aus diesem abgeleitet werden.

Gemäß einer weiteren, möglichen vorteilhaften Ausgestaltung einer erfindungsgemäßen Glasschmelzvorrichtung kann vorgesehen werden, dass eine über wenigstens einen Transformator an ein elektrisches Versorgungsnetz koppelbare elektrische Schaltung die Umschaltvorrichtung ist. Somit kann die für den Schmelzprozess benötigte elektrische Energie einfach einem öffentlichen Stromnetz, wie z. B. einen industriellen Drehstromnetz, aber auch einem üblichen Wechselstromnetz, entnommen werden.

Gemäß einer weiteren, möglichen vorteilhaften Ausgestaltungsform der erfindungsgemäßen Glasschmelzvorrichtung kann vorgesehen werden, dass die elektrische Schaltung eine Spannungsquelle und eine Stromquelle ist. Somit lässt sich die zum Zünden der Funkenstrecke notwendige elektrische Spannung nach dem Zünden herabsetzen und gleichzeitig die Stromstärke der elektrischen Energie erhöhen, um eine zum Schmelzen benötigte Wärmeleistung bereitzustellen. Dadurch kann die einer elektrischen Energiequelle entnommene Elektrizität auch verlustärmer auf ein für den Eletroheizbetrieb erforderliches Spannungsniveau umgespannt werden, weil das lediglich zum Zünden der Funkenstrecke notwendige, höhere Spannungsniveau nach dem Zünden herabgesetzt wird und die zur Bereitstellung der Zündspannung verwendeten Transformatoren, evtl. in einem diskreten Schaltkreis, nicht zur Bereitstellung der gesamten Schmelzleistung ausgelegt sein müssen.

Gemäß einer weiteren, möglichen vorteilhaften Ausgestaltungsform der erfindungsgemäßen Glasschmeizvorrichtung kann vorgesehen werden, dass wenigstens ein Werkstückträger zur Positionierung eines Glaswerkstücks in dem wenigstens einen Bearbeitungsbereich ausgebildet ist. Dieser Werkstückträger kann der jeweiligen Form und Beschaffenheit eines Glaswerkstückes angepasst sein und ermöglicht somit ein schonendes Befördern des Glaswerkstücks in einer Glasschmelzvorrichtung bzw. einer Fertigungsstraße.

Dabei kann gemäß einer weiteren, vorteilhaften Ausgestaltungsform einer erfindungsgemäßen Glasschmelzvorrichtung auch vorgesehen werden, dass der wenigstens eine Werkstückträger als Greiforgan ausgestaltet ist. Dies kann insbesondere dann von Vorteil sein, wenn ein Bereich des Glaswerkstückes geschmolzen werden soll, welcher bei einem Abstellen eines Glaswerkstückes auf einem Werkstückträger nach dem Schmelzen zu instabil wäre und sich das Glaswerkstück aufgrund der Erdanziehungskraft ungewollt verformen würde.

Gemäß einer weiteren, möglichen vorteilhaften Ausgestaltungsform der erfindungsgemäßen Glasschmelzvorrichtung kann vorgesehen werden, dass wenigstens ein Strömungsaustritt ein Gasbrenner ist. Somit kann ein herkömmlicher Gasbrenner, wie er auch schon eingangs beschrieben wurde, für eine erfindungsgemäße Glasschmelzvorrichtung verwendet werden.

Dabei kann gemäß einer weiteren, möglichen vorteilhaften Ausgestaltung der erfindungsgemäßen Glasschmelzvorrichtung auch vorgesehen werden, dass wenigstens eine Elektrode eine Brennerspitze des Gasbrenners ist. Dadurch lassen sich wesentliche Elemente einer erfindungsgemäßen Glasschmelzvorrichtung, nämlich der Strömungsaustritt und die Elektrode, in einem Bauteil vereinen. Ein herkömmlicher Gasbrenner kann in einer erfindungsgemäßen Glasschmelzvorrichtung eingesetzt werden, wenn er elektrisch leitend ist, ohne dass dazu eine übermäßig aufwändige technische Anpassung des Gasbrenners, bzw. eine komplette Neuentwicklung eines erfindungsgemäßen Strömungsaustrittes und der dazugehörigen Elektrode notwendig wären.

Im Folgenden wird die Erfindung anhand vorteilhafter Ausführungsformen mit Bezug auf die Zeichnungen beispielhaft erläutert. Die beschriebenen Ausführungsformen stellen dabei lediglich mögliche Ausgestaltungen dar, bei denen jedoch die einzelnen Merkmale, wie oben beschrieben ist, unabhängig voneinander realisiert oder weggelassen werden können.

### Es zeigen

- Fig. 1: eine schematische Vorderansicht einer erfindungsgemäßen Glasschmelzvorrichtung mit abgeflachten Strömungsaustritten der Beblasungsvorrichtung;
- Fig. 2: eine schematische Draufsicht der in Fig. 1 gezeigten erfindungsgemäßen Gfasschmelzvorrichtung in der Ebene der Strömungsaustritte;
- Fig. 3: eine schematische Vorderansicht der erfindungsgemäßen Glasschmelzvorrichtung aus Fig. 1 im Betrieb;
- Fig. 4: eine schematische Vorderansicht einer erfindungsgemäßen Glasschmelzvorrichtung mit in der Höhe versetzten Strömungsaustritten;
- Fig. 5: eine Vorderansicht einer erfindungsgemäßen Glasschmelzvorrichtung mit seitlich versetzten, stärker fokussierenden Strömungsaustritten;
- Fig. 6: eine schematische Draufsicht auf die in Fig. 5 gezeigte erfindungsgemäße Glasschmelzvorrichtung mit seitlich versetzten Strömungsaustritten in der Ebene der Strömungsaustritte;
- Fig. 7: eine schematische Draufsicht auf eine erfindungsgemäße Glasschmelzvorrichtung mit nahe beieinander liegenden, angewinkelten Strömungsaustritten;
- Fig. 8: ein schematisches Funktionsschaltbild einer erfindungsgemäßen Umschaltvorrichtung zum erfindungsgemäßen Bereitstellen von elektrischer Energie.

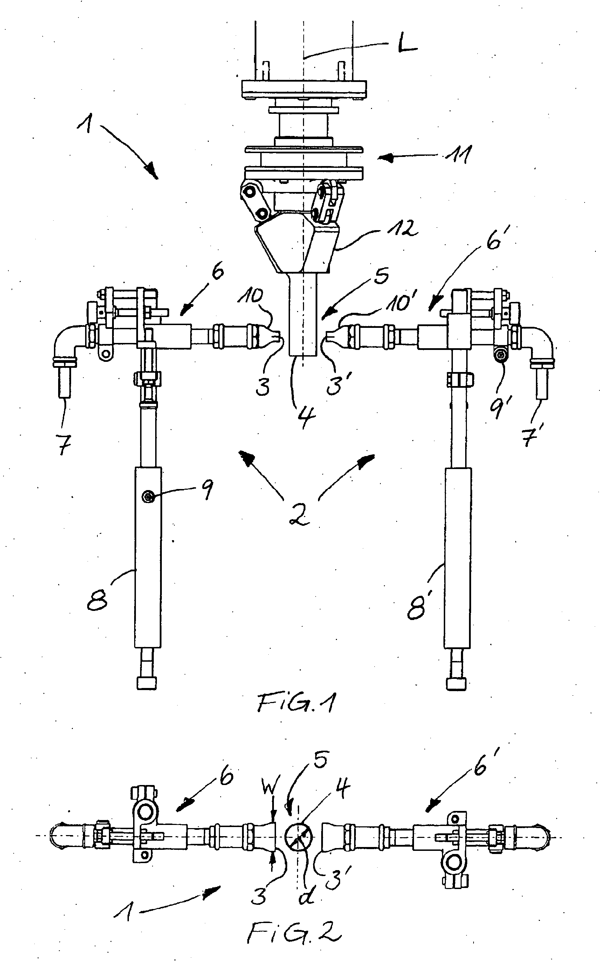

Zunächst wird der Aufbau der erfindungsgemäß ausgestalteten Glasschmelzvorrichtung mit Bezug auf die Fig. 1 beschrieben, welche eine erfindungsgemäße Glasschmelzvorrichtung 1 in der Vorderansicht zeigt. Die Glasschmelzvorrichtung 1 besitzt eine Beblasungsvorrichtung 2. Die Beblasungsvorrichtung 2 verfügt über die Strömungsaustritte 3 und 3'. Die Strömungsaustritte 3 und 3' sind auf ein Glaswerkstück 4 gerichtet, welches sich in einem Bearbeitungsbereich 5 in der Mitte zwischen den Strömungsaustritten 3 und 3' befindet.

Die Strömungsaustritte 3 und 3' sind Düsen von Gasbrennern 6 und 6'. Die Gasbrenner 6 und 6' werden über die Gasleitungen 7 und 7' mit einem Gasstoff versorgt und sind auf Ständern 8 und 8' schwenkbar gelagert.

Ferner verfügen die Gasbrenner 6 und 6' bzw. die Beblasungsvorrichtung 2 über elektrische Anschlüsse 9 und 9' zum elektrisch leitenden Verbinden der Gasbrenner 6 und 6' mit einer elektrischen Energiequelle (hier nicht gezeigt). Da die Gasbrenner 6 und 6' elektrisch leitfähig sind, fungieren ihre Brennerspitzen 10 und 10' als Elektroden 10 und 10'.

Zur besseren Handhabung des Glaswerkstückes 4 ist dieses an einem Werkstückträger 11 in einem Greiforgan bzw. Spannfutter 12 gehalten. Das Spannfutter 12 ist um die Längsachse L des Werkstückträgers 11 in einer Aufnahme 13 drehbar gelagert, wodurch das Glaswerkstück 4 um die sich bis in das Glaswerkstück 4 fortsetzende Längsachse L rotiert werden kann.

In Fig. 2 ist eine erfindungsgemäße Glasschmelzvorrichtung 1 in der Ebene der Gasbrenner 6 und 6' in einer Draufsicht gezeigt. Hier wird deutlich, dass die sich gemäß Fig. 1 vertikal düsenartig verjüngenden Brennerspitzen 10 und 10' horizontal diffusorartig weiten. Dadurch ist der zwischen den Brennerspitzen 10 und 10' gebildete Bearbeitungsraum 5 vertikal bzw, in der Höhe gestaucht und horizontal bzw. in der Breite erweitert. Diese Erweiterung verbessert die Umströmung eines sich im Bearbeitungsbereich 5 befindlichen Glaswerkstückes 4, dessen Breite bzw. Durchmesser d hier geringfügig kleiner ist als eine horizontale Öffnungsweite w der Brennerspitzen 10 und 10'. Somit wird das Glaswerkstück 4 in einem zu schmelzenden Abschnitt besser von einem aus den Gasaustrittsöffnungen 3 und 3' ausströmenden Gasstoff umströmt und eine gleichmäßigere Erwärmung bzw. Vorwärmung des Glaswerkstückes 4 wird mit einem Gasstoffstrom 14, 14' bzw. Brennerflammen 14 und 14' erreicht.

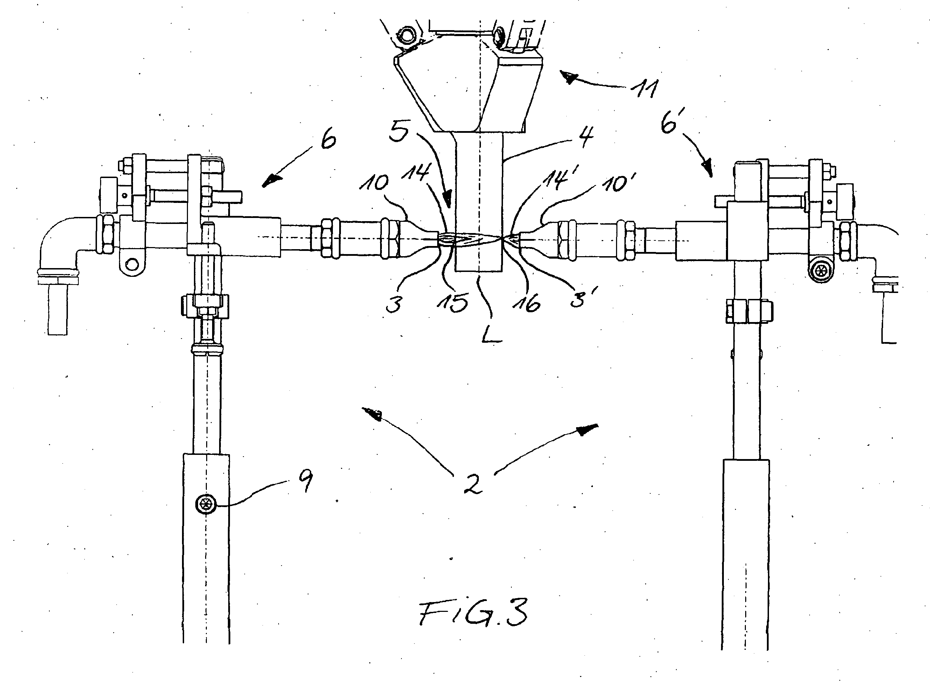

In Fig. 3 ist eine erfindungsgemäße Glasschmelzvorrichtung 1 im Betrieb gezeigt. Aus den Strömungsaustritten 3 und 3' der Brenner 6 und 6', welche als Beblasungsvorrichtung 2 eingesetzt werden, strömt der Gasstoffstrom 14, 14' in Form der Flammen 14 und 14' aus. Dabei ist die Elektrode 10 mit dem elektrischen Anschluss 9 am Brenner 6 elektrisch leitend verbunden, wobei der elektrische Anschluss 9 an ein Null- bzw. Erdpotential einer elektrischen Energiequelle angeschlossen ist. Dadurch stellt die Elektrode 10 eine Kathode und somit einen Sprühpol dar.

Die der Elektrode 10 auf der anderen Seite des Glaswerkstückes 4 bzw. des Bearbeitungsbereiches 5 gegenüberliegenden Elektrode 10' ist elektrisch leitend mit dem elektrischen Anschluss 9' verbunden, welcher an eine elektrische Spannungs- bzw. Stromquelle, also eine die elektrische Energie liefernde Phase angeschlossen ist. Somit fungiert die Elektrode 10' als Fangpol bzw. Anode für die an der als Sprühpol bzw. Kathode fungierende Elektrode 10 an die Brennerflamme 14 abgegebenen Elektronen.

Von den Elektronen angetrieben, erstreckt sich die Flamme 14 über die in der Mitte zwischen den Gasaustrittsöffnungen 3 und 3' befindliche Längsachse L des Glaswerkstückes 4. Hingegen erstreckt sich die Flamme 14' nur bis zum Glaswerkstück 4, wo sie die durch das Glaswerkstück 4 hindurchgeleiteten Elektronen aufnimmt, um diese abzuleiten. Dementsprechend befindet sich in einem Bereich, in dem die Flamme 14 auf das Glaswerkstück 4 tritt eine Einleitungsstelle 15 für die Elektronen in das Glaswerkstück 4. Auf der der Einleitungsstelle 15 gegenüberliegenden Seite des Glaswerkstückes 4 befindet sich die Ableitungsstelle 16, an der die Elektronen und damit die elektrische Energie das Glaswerkstück 4 wieder verlassen. Der sich zwischen der Einleitungsstelle 15 und der Ableitungsstelle 16 befindliche Abschnitt des Glaswerkstückes 4 wird durch die in ihm fließende elektrische Energie erwärmt.

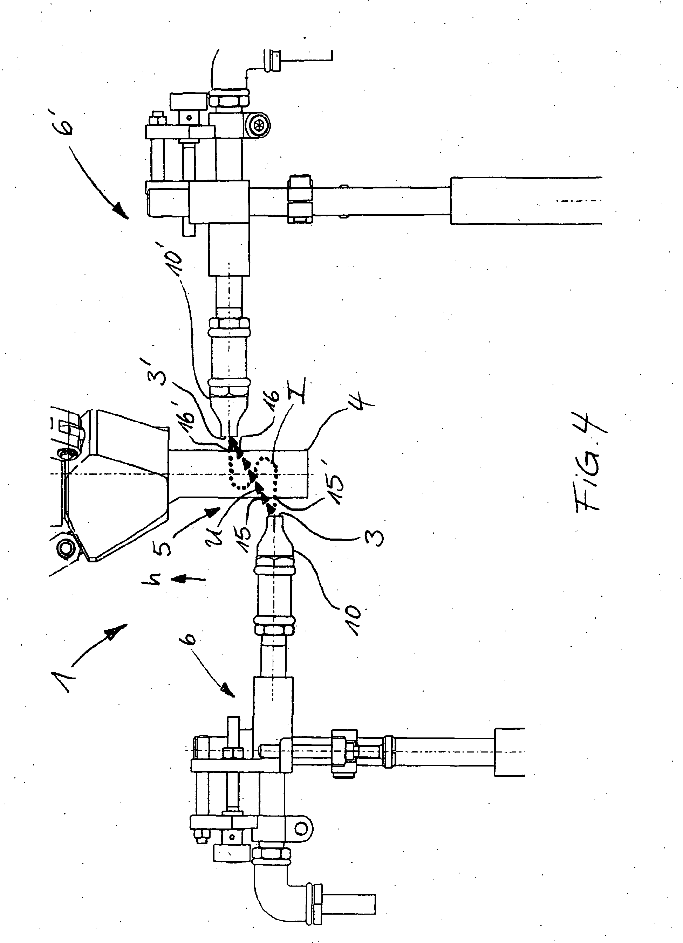

In Fig. 4 ist eine erfindungsgemäße Glasschmelzvorrichtung 1 mit in der Höhe h versetzten Gasbrennern 6 und 6' dargestellt, Durch die versetzte, parallele Anordnung der Brenner 6 und 6' sind die Elektroden 10 und 10' diagonal gegenüber stehend am sich zwischen ihnen gebildeten Bearbeitungsbereich 5 angeordnet, welcher in der Höhe h gestreckt ist. Dadurch verläuft der elektrische Spannungsgradient bzw. Spannungsverlauf U schräg durch das Glaswerkstück 4.

Wenn eine Funkenstrecke bei einer zum Zünden der Funkenstrecke sehr hohen Spannung von ca. 25000 V erzeugt wird, folgt der elektrische Strom unmittelbar dem Spannungsgradienten U. Nach dem Zünden der Funkenstrecke zwischen den Elektroden 10 und 10' kann die Spannung gesenkt werden, so dass sie dazu ausreicht, einen sich aus der Funkenstrecke bildenden Lichtbogen zu erhalten. Gleichzeitig wird die Stromstärke erhöht, bis die zum Schmelzen erforderlich Wärmeleistung in das Glaswerkstück 4 über den Lichtbogen eingeleitet wird.

Bei dieser geringeren Spannung ist der elektrische Widerstand des, Glaswerkstückes 4 nach einem Vorwärmen durch die Brenner 6 und 6' geringer als der elektrische Widerstand des zwischen dem Glaswerkstück 4 und den Strömungsaustritten 3 und 3' befindlichen Gasstoffes, wodurch der elektrische Strom den kürzesten Weg zum Glaswerkstück 4 wählt und sich ein Stromverlauf I einstellt. Der in Fig. 4 dargestellte Stromverlauf I soll schematisch verdeutlichen, dass die Elektroden bei geringeren Spannungen einen direkten Weg zum Glaswerkstück 4 wählen und im Glaswerkstück 4 dazu bestrebt sind, möglicht den gesamten ihnen zur Verfügung stehenden Querschnitt des Glaswerkstückes 4 einzunehmen, um nur den möglichst geringsten elektrischen Widerstand überwinden zu müssen. Somit verschiebt sich die Einleitungsstelle 15 bei hohen Spannungen nach dem Absenken der Spannung und einer Erhöhung der Stromstärke in Richtung der Einleitungsstelle 15'. Analog dazu verschiebt sich die Ableitungsstelle 16 nach einem Absenken der Spannung zur AbleitungssteHe 16'.

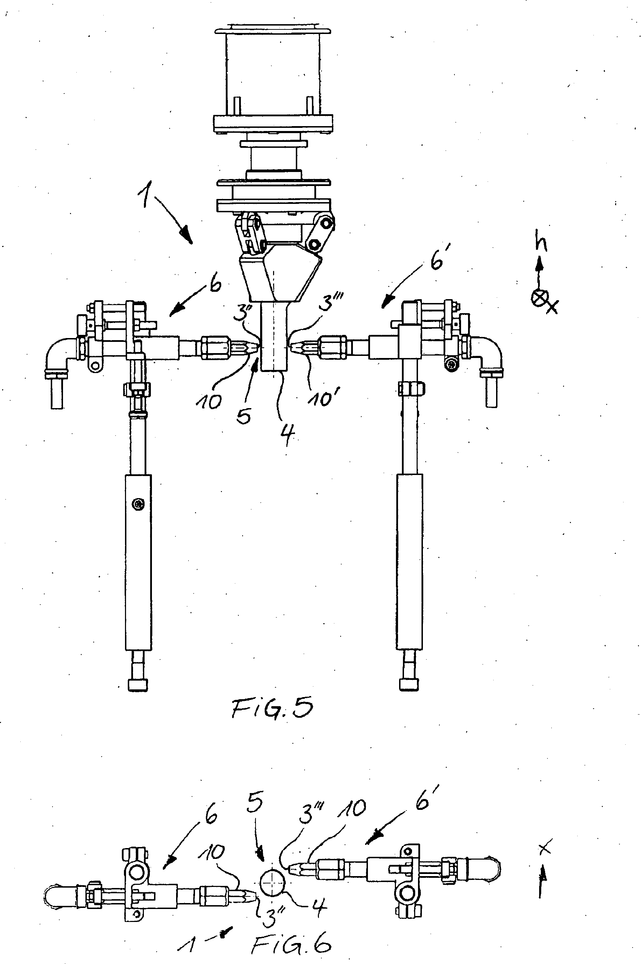

In Fig. 5 ist eine erfindungsgemäße Glasschmelzvorrichtung 1 gezeigt, in welcher die Brenner 6 und 6' mit gegenüber den in Fig. 1 bis 4 gezeigten abgeflachten Düsen 3 und 3' stärker den Gasstrom 14, 14' fokussierenden konischen Brennerspitzen 3" und 3'" ausgerüstet sind. Die Brennerspitzen fungieren hier ebenfalls als Elektroden 10 und 10'.

In Fig. 6 ist die erfindungsgemäße Glasschmelzvorrichtung aus Fig. 5 in einer Draufsicht in der Ebene der Gasbrenner 6 und 6' gezeigt. Hier wird deutlich, dass die Gasbrenner 6 und 6' in X-Richtung, also seitlich, versetzt sind und zwischen sich einen seitlich erweiterten Bearbeitungsbereich bilden. Durch die seitlich versetzte Anordnung der Strömungsaustritte 3 und 3' wird mit den aus den Strömungsaustritten 3" und 3'" austretenden Gasstoffströmen 14, 14' ein regelrechter Wirbel um das sich im Bearbeitungsbereich 5 befindliche Glaswerkstück 4 gebildet, wodurch das Glaswerkstück 4 von dem Gasstoffstrom 14, 14' horizontal quasi umschlossen wird. Eine derartige tangentiale Anordnung begünstigt ein gleichmäßiges Vorwärmen des zu schmelzenden Abschnittes des Glaswerkstückes 4 durch den Gasstoff 14, 14' bzw. eine Brennerflamme 14, 14', welche sich in diesem Falle förmlich um den Umfang des Glaswerkstückes 4 legt.

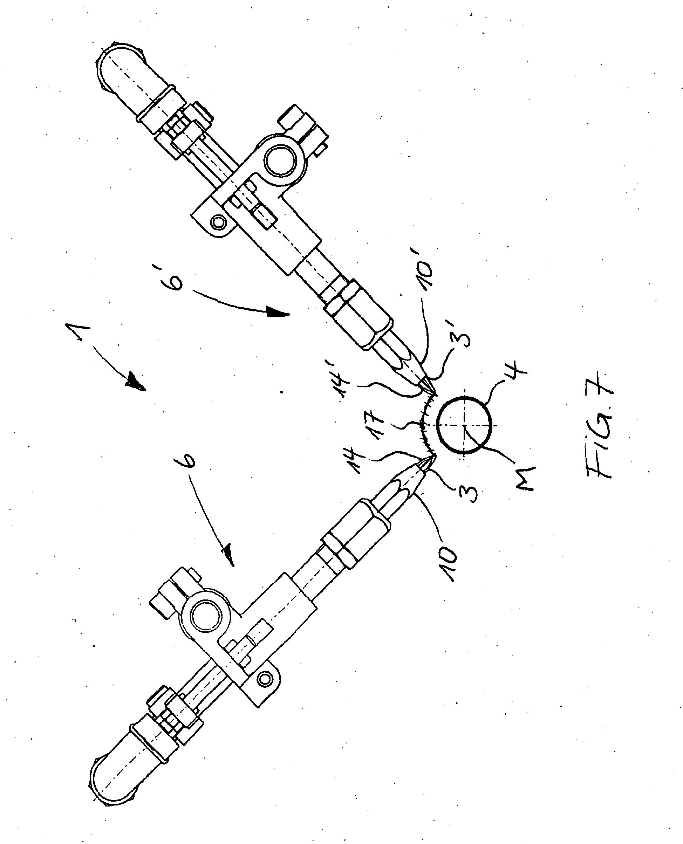

In Fig. 7 sind zwei diagonal bzw. schräg zueinander angeordnete Brenner 6 und 6' einer erfindungsgemäßen Glasschmelzvorrichtung 1 in einer Draufsicht gezeigt. Hier sind wieder die Brennerspitzen 10 und 10' als Elektroden 10 und 10' eingesetzt. Die von den Strömungsaustritten 3 und 3' in den Elektroden 10 und 10' ausgehenden Brennerflammen 14 und 14' sind auf den Mittelpunkt M eines Querschnittes des Glaswerkstückes 4 gerichtet. Dabei ist zwischen den Brennerspitzen 10 und 10' eine Funkenstrecke bzw. ein Lichtbogen 17 gezündet. Durch die diagonale Anordnung der Brennerspitzen 10 und 10' befindet sich das Glaswerkstück 4 nicht unmittelbar zwischen den Strömungsaustritten 3 und 3' und der Lichtbogen 17 legt sich um den Umfang des Glaswerkstückes 4. Dadurch streift das Plasma des Lichtbogens 17 sozusagen das Glaswerkstück 4 und dieses wird nur in einem kleinen Abschnitt von Elektrizität bzw. elektrischer Energie durchflossen und geschmolzen.

Eine derartige Anordnung der Brennerspitzen 10 und 10' kann von Vorteil sein, wenn zum Trennen bzw. Absprengen eines Teiles eines Glaswerkstückes 4 hohe Spannungen in dem Glaswerkstück 4 hervorgerufen werden sollen. An der gegenüberliegenden Seite der durch den Lichtbogen 17 erhitzen Stelle des Glaswerkstückes 4 kann dann durch ein Kühlelement, in Form eines feuchten Objektes, eines Peltierelementes oder sonstiger Wärmesenken, die Spannung im Glaswerkstück 4 schlagartig so stark erhöht werden, dass das Glaswerkstück 4 im Wesentlichen entlang des Temperaturgradienten glatt durchtrennt wird.

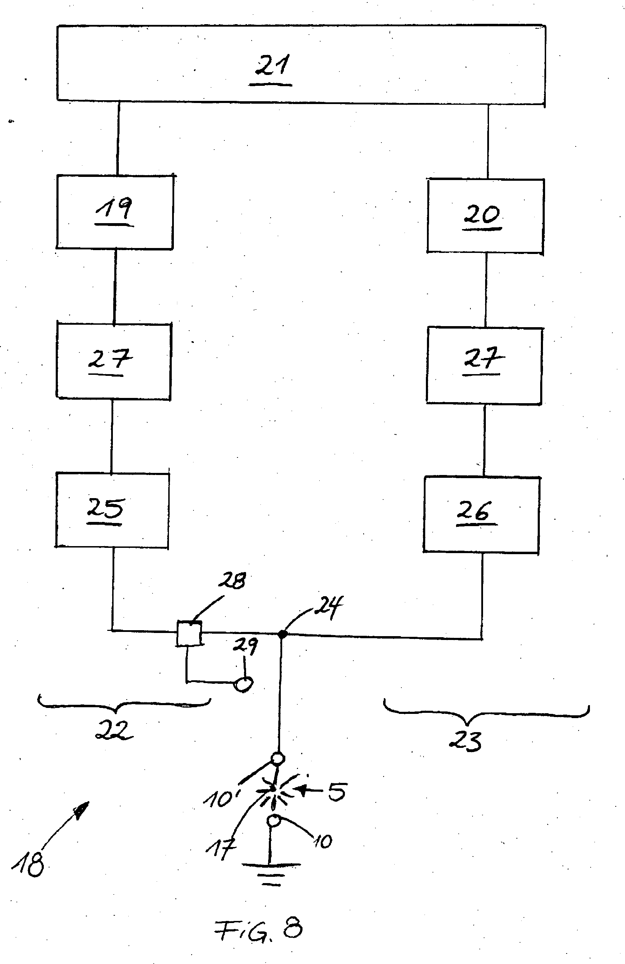

In Fig. 8 ist eine erfindungsgemäße Umschaltvorrichtung 18 einer erfindungsgemäßen Glasschmelzvorrichtung 1 gezeigt. Die Umschaltvorrichtung 18 ist über eine Reihe von Transformatoren 19 und 20 an ein elektrisches Versorgungsnetz 21 gekoppelt. Dabei versorgen die Transformatoren 19 einen Teil der Umschaltvorrichtung bzw. elektrischen Energieversorgung 18 mit elektrischer Energie, welcher als Spannungsquelle 22 verwendet wird. Die Transformatoren 20 versorgen einen Teil der Umschaltvorrichtung 18 mit elektrischer Energie, der als Stromquelle 23 für die erfindungsgemäße Glasschmelzvorrichtung 1 eingesetzt wird.

Die Spannungsquelle 22 und die Stromquelle 23 speisen elektrische Energie in einen Mischungspunkt 26 ein. In dem vor einem Mischungspunkt 24 liegenden Leitungsabschnitt der Spannungsquelle 22 und der Stromquelle 23 sind diese jeweils mit Schutzeinrichtungen 25 und 26 ausgerüstet, um eine Beschädigung der Energieversorgung 18 zu verhindern, wenn in der Spannungsquelle 22 und der Stromquelle 23 unterschiedliche Spannungen herrschen und unterschiedliche elektrische Leistungen abgerufen werden.

Der Mischungspunkt 24 ist elektrisch leitend mit einer Elektrode 10' verbunden, in welche die im Mischungspunkt bereitgestellte elektrische Energie eingeleitet wird. Der Elektrode 10' an einem Bearbeitungsbereich 5 gegenüberliegend ist die mit einem Erdpotenzial verbundene Elektrode 10 angeordnet. Im Elektroheizbetrieb einer erfindungsgemäßen Glasschmelzvorrichtung 1 wird zwischen der Elektrode 10' bzw. Anode 10' und der Elektrode 10 bzw. Kathode 10 eine Funkenstrecke bzw. ein Lichtbogen 17 erzeugt.

Ferner verfügt die Umschaltvorrichtung 18 bzw elektrische Vorsorgungsschaltung, oder auch Tesla-Transformator, Teslaspule oder Spannungsverdoppler-Schaltung 18 einer erfindungsgemäßen Glasschmelzvorrichtung über einen Frequenzgenerator 27, der es ermöglicht, für den Personenschutz vorteilhafte Wechselströme hoher Frequenz, d. h. im KHz-Bereich, zu erzeugen. Ebenso können durch die erfindungsgemäße Umschaltvorrichtung 18 aber auch Gleichströme bzw. Gleichspannungen zur Verfügung gestellt werden, welche weniger personengefährdend sind, als Wechselströme bzw. -spannungen herkömmlicher Frequenz, d. h. im Bereich von ca. 50 Hz.

Es ist insbesondere von Vorteil, wenn mit der Umschaltvorrichtung 18 ein sägezahn- oder rechteckförmige Wechseispannungsverläufe verwendet werden. Sägezahn- oder insbesondere Rechteckspannungen besitzen höhere Energieinhalte als einfache Sinuswechselspannungen und können leichter eine Funkenstrecke 17 ionisieren. Derartige Sägezahn- oder Rechteckspannungen können insbesondere mit einem Tesla-. Transformator 18 leicht erzeugt werden. Dabei wird der Effekt genutzt, dass in dem Transformator die Spannung primärseitig kurzfristig abreißt bzw. der Strom kurzfristig unterbrochen ist und dadurch die Sägezahn- oder Rechteckverläufe erzeugt werden.

Zusätzlich kann eine erfindungsgemäße Umschaltvorrichtung 18 eine Sicherheitseinrichtung 28 besitzen. Diese Sicherheitseinrichtung 28 kann in einer Zuleitung zu dem Mischungspunkt 24 oder an einem anderen Ort in der Energieversorgungskette der Umschaltvorrichtung, 18 angeordnet sein und die Stromzufuhr zu der Elektrode 10' unterbrechen, sobald sich eine Person in einem Gefahrenbereich um eine erfindungsgemäße Glasschmelzvorrichtung 1 befindet. Dazu kann die Sicherheitseinrichtung 28 einen Näherungssensor, Näherungsschalter oder Bewegungsmelder 29 besitzen, der eine Person oder einen Gegenstand in dem Gefahrenbereich um eine erfindungsgemäße Glasschmelzvorrichtung 1 erfassen kann und daraus ein elektrisches oder mechanisches Signal erzeugbar ist. Über das elektrische oder mechanische Signal kann die Sicherheitseinrichtung 28 geschaltet werden, um beispielsweise die Stromzufuhr zum Mischungspunkt 24 einseitig zu unterbrechen, wodurch ein erfindungsgemäßer Lichtbogen bzw. eine Funkenstrecke 17 bereits abreißen kann, weil zu dessen Erhaltung die Stromstärke bzw. Spannung nicht mehr ausreicht.

Als Sicherheitseinrichtung 28 könnte beispielsweise ein Halbleiter bzw. eine Diode, ein Transistor oder eine Röhre 28 eingesetzt werden, der bei einem Wegfall einer von dem Näherungssensor geschalteten Steuerspannung die Strom- bzw. Spannungszufuhr unverzüglich unterbricht.

Bei einer als Sicherheitseinrichtung 28 verwendeten Röhre 28 kann die Heizspannung beispielsweise mit Hilfe des Näherungssensors 29 geschaltet werden. Sollte sich eine Person oder ein Gegenstand in einem Gefahrenbereich um eine erfindungsgemäße Glasschmelzvorrichtung 1 befinden, so unterbricht der Näherungssensor 29 die Heizspannung der Sicherheitseinrichtung 28 und diese unterbricht unverzüglich die Strom- bzw. Spannungsversorgung des Mischungspunktes, die zwischen der Glühkathode und -anode der Sicherheitseinrichtung 28 bei einem Wegfall der Heizspannung entkoppelt ist.

Die Verwendung einer Röhre 28 als Sicherheitseinrichtung 28 hat insbesondere den Vorteil, dass es im Gegensatz zu mechanischen Schaltern nach dem Abschalten der Heizspannung nicht zu unerwünschten Spannungsüberschlägen zwischen der Glühkathode und der -anode kommen kann, wodurch die Stromzufuhr sicher und schnell unterbrochen ist.

Innerhalb des Erfindungsgedankens sind Abweichungen von den oben beschriebenen Ausführungsformen möglich. So können Elektroden 10 und 10' auch von den Gasaustrittsöffnungen 3, 3', 3", 3'" getrennte Einrichtungen sein, indem beispielsweise eine Elektrode als elektrisch leitender Draht in oder an einer beispielsweise keramischen Düse bzw. einem Strömungsaustritt 3, 3', 3", 3'" angeordnet ist.

Ferner können die Elemente einer erfindungsgemäßen Glasschmelzvorrichtung 1, also im Wesentlichen ein Werkstückträger 11 und eine Bebtasungsvörrichtung 2 sowie die Strömungsaustritte 3, 3', 3", 3"' und die Elektroden 10, 10' frei beweglich und in alle Raumrichtungen ausrichtbar aisgestaltet sein, um die Arbeitsweise einer erfindungsgemäßen Glasschmelzvorrichtung 1 den jeweiligen Anforderung an die Produktion von Glasobjekten anzupassen. Anzahl und Aufbau der Werkstückträger 11 ist beliebig, so können auch eine Vielzahl von Werkstückträgern 11 in einem Karussell angeordnet sein. Die Elektroden 10 und 10' bzw. in diesem Fall die Brennerspitzen 10 und 10' der Düsen 3 und 3' können aus einem beliebigen elektrisch leitenden Material gefertigt sein, wobei sich Edelstahl auf (VA-Stahl) als besonders vorteilhaft erwiesen hat, weil mit ihm die zum Zünden einer Funkenstrecke 17 erforderliche Zündspannung relativ gering ist.

Generell ist es von Vorteil, den Abstand zwischen den Elektroden 10 und 10' gering zu halten, um den zwischen den Elektroden 10 und 10' und dem Glaswerkstück 4 befindlichen Gas- und/oder Luftraum bzw. Randbereich des Bearbeitungsbereiches 5 möglichst einfach mit einer Funkenstrecke 17 bzw. einem Lichtbogen 17 überwinden, zu können. Dabei ist ein Umschalten von einer Spannungsquelle 22 zu einer Stromquelle 23 nicht obligatorisch und lediglich als vorteilhaft für die Energiebereitstellung und den Verlauf des Strömungsweges in einem Glaswerkstück 4 zu betrachten.

Ein Glaswerkstück 4 mit einem Gasbrenner 6, 6' vorzuwärmen ist optional, genauso gut kann ein bereits vorgewärmtes Glaswerkstück 4 in einem Bearbeitungsraum 5 an einer oder zwischen mehreren Elektroden 10, 10' geführt werden. Dabei ist es auch denkbar, elektrische Energie über einen direkten Kontakt zum Glaswerkstück 4 auf dieses überzuleiten. Um den Verlauf des Strömungsweges der elektrischen Energie in dem Glaswerkstück 4 zu beeinflussen bzw. die Einleitungspunkte 15, 15' und Ableitungspunkte 16 und 16' zu variieren, können eine beliebige Anzahl von beliebig ausrichtbaren Magnetfeldern um das Glaswerkstück 4 gebildet werden, die sowohl durch Permanentmagneten als auch Elektromagneten erzeugbar sind, wobei Elektromagneten den Vorteil besitzen, dass sie mit Hilfe elektronischer Schaltungen sehr vielseitig zum Erzeugen von beliebig starken und beliebig ausrichtbaren elektromagnetischen Feldern eingesetzt werden können.

Ein Brenngas innerhalb des Gasstoffstromes 14, 14', wie z. B. Wasserstoff, Erdgas oder Propan, u.s.w., zu verwenden, ist optional, genauso gut kann eventuell vorgewärmtes CO₂ ein sonstiges möglichst unreaktives bzw. inertes Gas oder Schutzgas verwendet werden, um ein Glaswerkstück 4 zu beströmen. So ist es auch denkbar, eine Funkenstrecke oder einen Lichtbogen 17 ausschließlich über die zwischen einer Elektrode 10, 10' und dem Glaswerkstück 4 befindliche Luft auf das Glaswerkstück 4 überzuleiten.

Die Elektroden 10 und 10' bzw. in diesem Fall die Brennerspitzen 10 und 10' der Düsen 3 und 3' können aus einem beliebigen elektrisch leitenden Material gefertigt sein, wobei sich Edelstahl auf (VA-Stahl) als besonders vorteilhaft erwiesen hat, weil mit ihm die zum Zünden einer Funkenstrecke 17 erforderliche Zündspannung relativ gering ist.

In einer erfindungsgemäßen Glasschmelzvorrichtung 1 und einem erfindungsgemäßen Verfahren zum zumindest abschnittsweisen Schmelzen Glaswerkstücken 4 können alle Gläser mit Metallsalzgehalt verwendet werden, die bei Erwärmung eine zunehmende elektrische Leitfähigkeit aufweisen.

Schließlich ist die vorliegende Erfindung auch nicht ausschließlich für Glaswerkstücke 4 verwendbar, sondern kann auch zum schnellsten jeglicher Werkstoffe und Werkstücke mit hohen Schmelzpunkten, wie z. B. Keramiken oder Minerale, verwendet werden, wobei zumindest eine geringe elektrische Leitfähigkeit des zu erwärmenden bzw. schmelzenden Gutes von Vorteil ist.

Die verwendeten Temperaturen und Wärmeleistungen sind den jeweiligen Anforderungen gemäß anzupassen. So kann in einer gezeigten Ausführungsform eine Schmelzzeit eines Glashohlkörpers im Bereich von ca. 1 Sekunde erreicht werden, wobei dieser Wert natürlich stark mit der zu erwärmenden Masse und der in ein Werkstück eingebrachten Vorwärm- und Elektroheizleitung variiert. Dabei kann ein erfindungsgemäßes Verfahren auch dazu eingesetzt werden, gezielt eine Entglasung eines zu schmelzenden Glaswerkstückes 4 hervorzurufen oder rückgängig zu machen.

## Patentansprüche

1. Verfahren zum wenigstens abschnittsweisen Schmelzen von Glaswerkstücken (4), bei dem ein Glaswerkstück (4) zunächst wenigstens abschnittsweise vorgewärmt wird und bei dem das Glaswerkstück (4) zumindest während des Schmelzvorganges von einem Gasstoffstrom (14') angeströmt wird, **dadurch gekennzeichnet, dass** nach dem Vorwärmen wenigstens ein Teil der zum Schmelzen notwendigen Wärme aus elektrischer Energie erzeugt wird, die entlang einer im Gasstoffstrom (14) gebildete Funkenstrecke (17) auf das Glaswerkstück (4) und wenigstens abschnittsweise durch das Glaswerkstück (4) geleitet wird.

2. Verfahren nach Anspruch 1, **dadurch gekennzeichnet, dass** nach dem Vorwärmen die elektrische Energie dem Vorwärmprozess zugeschaltet wird.

3. Verfahren nach Anspruch 1, **dadurch gekennzeichnet, dass** nach dem Vorwärmen die zum Vorwärmen verwendete Energiequelle abgeschaltet wird.

4. Verfahren nach einem der oben genannten Ansprüche, **dadurch gekennzeichnet, dass** die Funkenstrecke (17) mit einer erhöhten Spannung der elektrischen Energie gezündet und der Schmelzvorgang nach dem Zünden mit einer erhöhten Stromstärke der elektrischen Energie durchgeführt wird.

5. Verfahren nach einem der oben genannten Ansprüche, **dadurch gekennzeichnet, dass** aus dem Glaswerkstück (4) die auf das Glaswerkstück (4) übergeleitete elektrische Energie entlang einer weiteren Funkenstrecke (17') in einem weiteren Gasstoffstrom (14') abgeleitet wird.

6. Verfahren nach einem der oben genannten Ansprüche, **dadurch gekennzeichnet, dass** der Weg der elektrischen Energie durch das Glaswerkstück (4) geändert wird, indem die Einleitungsstelle (15, 15') und/oder die Ableitungsstelle (16, 16') der elektrischen Energie verändert wird.

7. Verfahren nach Anspruch 3, **dadurch gekennzeichnet, dass** die Funkenstrecke (17) vom und/oder zum Glaswerkstück (4) mit Hilfe eines Magnetfeldes geändert wird.

8. Verfahren nach einem der oben genannten Ansprüche, **dadurch gekennzeichnet, dass** das Glaswerkstück (4) mit dem Gasstoffstrom (14, 14') vorgewärmt wird.

9. Verfahren nach einem der oben genannten Ansprüche, **dadurch gekennzeichnet, dass** in dem Gasstoffstrom (14, 14') eine Verbrennungsreaktion eines Gasstoffes herrscht.

10. Verfahren nach einem der oben genannten Ansprüche, **dadurch gekennzeichnet, dass** mit dem Gasstoffstrom (14, 14') zumindest abschnittsweise eine Schutzatmosphäre um das Glaswerkstück (4) gebildet wird.

11. Verfahren nach einem der oben genannten Ansprüche, **dadurch gekennzeichnet, dass** das Glaswerkstück (4) mit dem Gasstoffstrom (14, 14') exzentrisch angeströmt wird.

12. Verfahren nach einem der oben genannten Ansprüche, **dadurch gekennzeichnet, dass** das Glaswerkstück (4) während des Schmelzens bewegt wird und der Gasstoffstrom 14, 14' mit den Bewegungen des Glaswerkstücks (4) mitgeführt wird.

13. Verfahren nach einem der oben genannten Ansprüche, **dadurch gekennzeichnet, dass** das Zünden der Funkenstrecke (17) nach einer bestimmten Vorwärmzeit und/oder nach dem Erreichen einer bestimmten Umschalttemperatur erfolgt.

14. Glasschmelzvorrichtung (1) mit wenigstens einer Beblasungsvorrichtung (2), die wenigstens einen auf einen ein Glaswerkstück (4) aufnehmenden Bearbeitungsbereich (5) ausrichtbaren ersten Strömungsaustritt (3) aufweist, wobei in einem Vorwärmbetrieb ein Gasstoffstrom (14) die Beblasungseinrichtung (2) mit dem Glaswerkstück (4) verbindet, **dadurch gekennzeichnet, dass** dem ersten Strömungsaustritt (3) eine erste Elektrode (10) zugeordnet ist, dass eine in einen Elektroheizbetrieb umschaltbar Umschaltvorrichtung (18) vorgesehen ist, durch welche in einem Elektroheizbetrieb eine elektrische Energiequelle (21, 22, 23) mit der ersten Elektrode (10) verbunden ist, und dass im Elektroheizbetrieb eine erste Funkenstrecke (17) die erste Elektrode (10) entlang des ersten Gasstoffstroms (14) mit dem Glaswerkstück (4) verbindet.

15. Glasschmelzvorrichtung (1) nach Anspruch 14, **dadurch gekennzeichnet, dass** eine zweite Elektrode (10') vorgesehen ist, die im Elektroheizbetrieb über eine zweite Funkenstrecke (17') mit dem Glaswerkstück (4) verbunden ist.

16. Glasschmelzvorrichtung (1) nach Anspruch 15, **dadurch gekennzeichnet, dass** die zweite Elektrode (10') wenigstens einem zweiten Strömungsaustritt (3') zugeordnet ist, wobei im Vorwärmbetrieb der zweite Strömungsaustritt (3') über einen zweiten Gasstoffstrom (14') mit dem Glaswerkstück (4) verbunden ist, und dass die zweite Funkenstrecke (17') innerhalb des zweiten Gasstoffstroms (14') verläuft.

17. Glasschmelzvorrichtung (1) nach einem der Ansprüche 14 bis 16, **dadurch gekennzeichnet, dass** eine über über wenigstens einen Transformator (19, 20) an ein elektrisches Versorgungsnetz (21) koppelbare elektrische Schaltung (18) die Umschaltvorrichtung (18) ist.

18. Glasschmelzvorrichtung (1) nach Anspruch 17, **dadurch gekennzeichnet, dass** die elektrische Schaltung (18) eine Spannungsquelle (22) und eine Stromquelle (23) ist.

19. Glasschmelzvorrichtung (1) nach einem der Ansprüche 12 bis 17, **dadurch gekennzeichnet, dass** wenigstens ein Werkstückträger (11) zur Positionierung eines Glaswerkstücks (4) in dem wenigstens einen Bearbeitungsbereich (5) ausgebildet ist.

20. Glasschmelzvorrichtung (1) nach Anspruch 18, **dadurch gekennzeichnet, dass** der wenigstens eine Werkstückträger (11) als Greiforgan (12) ausgestaltet ist.

21. Glasschmelzvorrichtung (1) nach einem der Ansprüche 14 bis 20, **dadurch gekennzeichnet, dass** wenigstens ein Strömungsaustritt (3, 3') ein Gasbrenner (6, 6') ist.

22. Glasschmelzvorrichtung (1) nach Anspruch 21, **dadurch gekennzeichnet, dass** wenigstens eine Elektrode (10, 10') eine Brennerspitze (10, 10') des Gasbrenners (6, 6') ist.
